(19) Europäisches Patentamt / European Patent Office / Office européen des brevets

(11) **EP 2 454 694 B1**

(12) **FASCICULE DE BREVET EUROPEEN**

(45) Date de publication et mention de la délivrance du brevet:
**16.09.2020 Bulletin 2020/38**

(51) Int Cl.:
**G06F 30/20** *(2020.01)*　　　　*G06F 111/10* *(2020.01)*
*G06F 113/26* *(2020.01)*

(21) Numéro de dépôt: **10728694.0**

(22) Date de dépôt: **06.07.2010**

(86) Numéro de dépôt international:
**PCT/EP2010/059672**

(87) Numéro de publication internationale:
**WO 2011/006805 (20.01.2011 Gazette 2011/03)**

(54) **PROCÉDÉ DE RÉALISATION DE LIAISONS MÉCANIQUES**

VERFAHREN ZUR HERSTELLUNG MECHANISCHER VERBINDUNGEN

METHOD FOR CREATING MECHANICAL LINKS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **16.07.2009 FR 0954936**

(43) Date de publication de la demande:
**23.05.2012 Bulletin 2012/21**

(73) Titulaire: **ArianeGroup SAS**
**75015 Paris (FR)**

(72) Inventeurs:
• **AUBERON, Marcel**
**F-33160 St Médard en Jalles (FR)**
• **PETERMANN, Nicolas**
**F-33200 Bordeaux (FR)**

(74) Mandataire: **Brevalex**
**95, rue d'Amsterdam**
**75378 Paris Cedex 8 (FR)**

(56) Documents cités:
**FR-A1- 2 873 347　　US-A1- 2007 154 317**

**Description**

La présente invention concerne la technologie des liaisons mécaniques de pièces structurales et en particulier de pièces structurales en matériaux composites.

L'invention en particulier prévoit un procédé de réalisation de liaisons mécanique notamment adapté à la réalisation d'un dispositif d'assemblage de tronçons de pales d'éoliennes.

Cette invention concerne en particulier le domaine des assemblage de pièces composites structurelles de grandes dimensions telles que des pales d'éoliennes de grandes dimensions.

Les liaisons mécaniques contrairement par exemple aux liaisons collées ou soudées sont des liaisons pouvant être démontables.

Une méthode généralement utilisée pour réaliser des liaisons mécaniques entre des panneaux ou des structures composite est d'utiliser plusieurs pièces métalliques d'interface, chacune fixée sur le composite de manière discontinue et d'utiliser des moyens de fixation mécanique comme des vis, des pions, des boulons ou autres.

Si ces solutions peuvent sembler être optimisées, il n'en est en fait rien, car elles ne permettent pas d'assurer un passage d'effort homogène sur toute la paroi de la structure composite.

Ceci génère des sur-flux locaux entraînant un risque de rupture progressive s'amorçant sur les zones les plus contraintes, phénomène appelé déboutonnage.

De plus, au niveau analyse mécanique, ces sur-flux locaux sont difficiles à quantifier, ce qui pénalise la fiabilité et l'optimisation de la structure, la liaison réalisée étant ainsi difficile à garantir.

On conçoit aujourd'hui de nombreuses pièces structurelles composites de grandes dimensions et notamment des pales d'éoliennes dont les dimensions atteignent plusieurs dizaines de mètres.

Les pales d'éoliennes sont réalisées en matériaux composites qui permettent de conserver à ces pièces en mouvement une masse réduite ce qui diminue les efforts de fixation à reprendre.

Ces pales sont généralement réalisées en plusieurs tronçons de façon à simplifier leur transport et notamment leur transport par camions.

Se pose donc le problème de l'assemblage mécanique de pièces en matériaux composites dans une perspective de solution mécaniquement optimisée en terme de masse, en particulier dans le cas où les efforts à faire passer par la liaison sont très importants et complexes, la liaison devant résister à des efforts mécaniques, de fatigue et d'environnement importants avec une fiabilité très élevée.

Les documents EP 1 584 817, EP 1 878 915 et WO 01/48378 décrivent des liaisons de tronçons de pales d'éoliennes assurées par plusieurs pièces métalliques.

Dans le cas du document EP 1 878 915 la liaison utilise des tiges métalliques insérées dans les parois du caisson central et collées en place.

Dans le document WO 01/48378 les liaisons sont réparties tout au long de la peau de la pale et dans le document EP 1 584 817 des attaches séparées, solidaires de caissons centraux des tronçons sont fixées, ensemble et reprises par des éléments de couverture de l'interstice entre pales.

Ces exemples de réalisation utilisent des moyens de fixation mécanique discontinus.

Par ailleurs, pour le calcul des liaisons piontées métal/composite des méthodes sont connues même si un tel calcul est assez complexe du fait de tous les phénomènes à prendre en compte et notamment: le transfert d'effort entre le composite et les pions, le cisaillement dans les pions, le matage du composite, la tenue en traction du composite et/ou du métal et le trusquinage.

Il est important de noter que les méthodes connues de calcul des transferts d'effort sont très approximées, car elles simplifient la géométrie de l'assemblage en le représentant sous forme d'un simple cisaillement ce qui permet d'utiliser la méthode de calcul des cisaillements connue sous le nom méthode de Huth.

Du fait de cette approximation, les méthodes classique ne permettent pas en fait d'effectuer un paramétrage exhaustif des liaisons.

En particulier, le modèle de Huth ne permet pas d'étudier des liaisons de géométrie non symétrique, ce qui limite son champ d'utilisation.

De plus, les formules de calcul associées à ce modèle, notamment pour le calcul du cisaillement dans les pions, posent des difficultés de généralisation pour le multi-cisaillement, cas dans lequel ce modèle n'est pas du tout adapté.

Le document FR 2 675 563 décrit un procédé de liaison entre un tube en matériau composite et une pièce métallique tubulaire.

Dans ce procédé, la pièce métallique est fixée au composite à la fois par collage et par des fixations mécaniques, ce qui fait que les flux mécaniques que l'on peut passer sont plus élevés. Ce procédé pour lequel l'optimisation de la liaison piontée dépend de l'orientation des fils de bobinage est toutefois spécifique aux tubes bobinés et donc à un procédé particulier de fabrication du matériau composite.

Ce concept ne s'applique pas directement à des pièces composites comme les tronçons de pales d'éolienne, qui ne sont pas fabriquées en général par bobinage et dont l'orientation des fibres est fixée par les contraintes d'utilisation de ces pales.

La présente invention a pour but de définir une liaison mécanique de pièces structurales et en particulier une liaison métal composite qui soit fiable, optimisée mécaniquement et en terme de masse, en particulier pour être utilisée sur des tronçons de pâles d'éoliennes.

La liaison obtenue doit en particulier être démontable, minimiser les sur-flux locaux que le composite serait susceptible de subir, être optimisée mécaniquement et être compatible avec les exigences aérodynamiques d'une pale d'éolienne.

Pour ce faire, la présente invention propose un procédé de réalisation d'une liaison mécanique à multi-cisaillements caractérisé en ce qu'on dimensionne la liaison à multi-cisaillements en décomposant le système constitué par la liaison en en autant de sous ensembles qu'il y a d'interfaces de cisaillement simples, en définissant les sous ensembles autour de chaque interface de cisaillement, en décrivant chaque cisaillement par sa raideur en en appliquant les relations mécaniques pour aboutir à un système d'équations adapté à une résolution sur ordinateur en appliquant la méthode de Huth à chaque interface de cisaillement.

Préférablement on dimensionne ensuite chaque zone de la liaison autour des cisaillements par un processus itératif par ajout de matière à une itération déterminant une contrainte trop élevée, et par retrait de matière à une itération déterminant une contrainte faible.

Avantageusement, on représente les sous ensembles par des ensembles de ressorts, chaque ressort étant représentatif de la raideur du matériau sollicité.

Plus particulièrement, on décompose la liaison en un ensemble de sous systèmes de Huth de type maille et on relie les mailles adjacentes par un ressort en sorte de traduire le fait qu'un même matériau est sollicité par deux zones de cisaillement distinctes.

Plus précisément, on calcule ensuite les diverses raideurs, en fonction des propriétés des matériaux concernés, de la géométrie des pièces mises en jeu et des efforts à faire passer dans la liaison.

Avantageusement, on prend en compte de façon indépendante chaque pion et chaque matériau.

Dans le cas d'une liaison à cisaillement d'ordre quatre comportant deux ailes composites, trois ailes de métal et trois rangées de pions, le procédé est tel qu'on décompose la liaison en un ensemble de 8 sous systèmes de Huth de type maille.

Avantageusement, on représente les sous ensembles par des ensembles de 4 ressorts, chaque ressort étant représentatif de la raideur du matériau sollicité.

D'autres caractéristiques et avantages de l'invention seront apparents à la lecture de la description qui suit d'un exemple de réalisation de l'invention en référence aux dessins qui représentent:

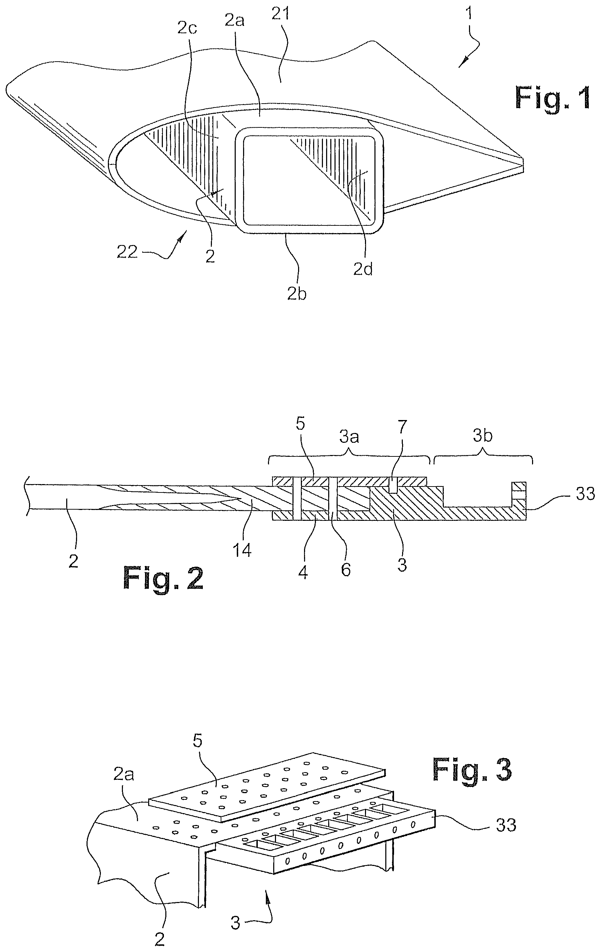

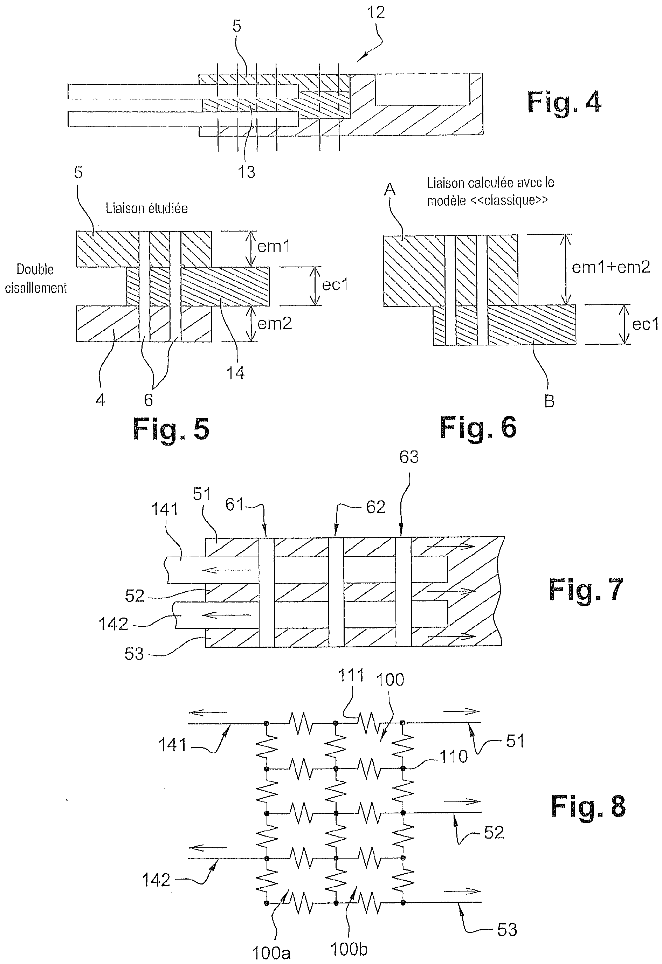

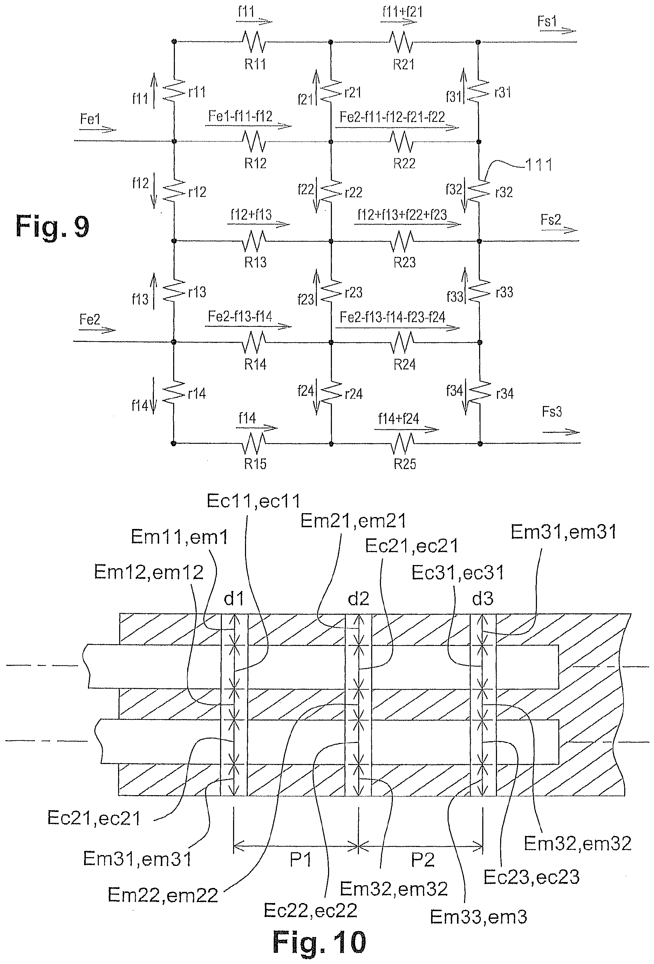

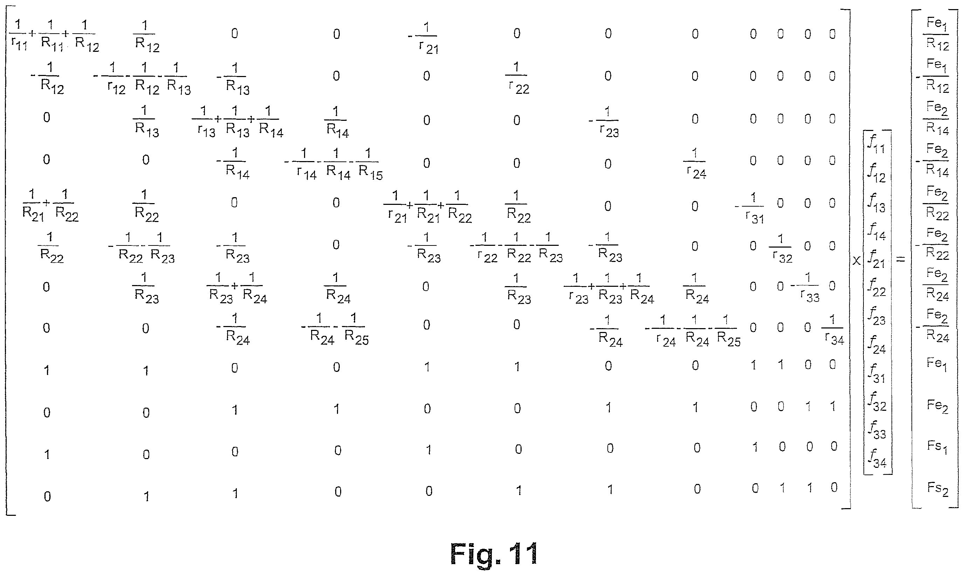

en figure 1 : une vue schématique en perspective d'un segment de tronçon de pale d'éolienne ;
en figure 2 : une vue schématique en coupe d'un dispositif réalisé selon le procédé de l'invention fixé sur un élément de tronçon de pale d'éolienne ;
en figure 3 : une vue schématique en perspective du dispositif de la figure 2;
en figure 4 : une vue de côté coupe d'une variante avec doubleur intercalé ;
en figure 5 : la liaison de la figure 2 calculée selon le procédé de l'invention ;
en figure 6 : la liaison de la figure 2 calculée avec le modèle de l'art antérieur ;
en figure 7 : une représentation schématique d'une liaison à cisaillement d'ordre 4 constituée de 3 rangées de pions ;
en figure 8 : une décomposition de la liaison de la figure 7 en sous systèmes de Huth « maille » ;
en figure 9 : une représentation de la liaison de la figure 7 et des paramètres de la liaison ;
en figure 10 : une représentation de la modélisation sous forme de ressorts de la liaison de la figure 7 ;
en figure 11 : le système linéaire selon le procédé de l'invention pour la liaison de la figure 7.

Le procédé de dimensionnement d'une liaison mécanique de la présente invention s'adresse par exemple à des liaisons composite/métal utilisées dans les assemblages de tronçons 1 de pales d'éoliennes dont un exemple est schématisé en figure 1.

Ce tronçon comporte une peau formant l'extrado 21 et l'intrado 22 de la pale et comporte un caisson central 2 assurant la tenue mécanique de la pale.

Le dispositif d'assemblage de tels tronçons comprend au moins une attache dont un premier exemple de réalisation sous la forme d'une attache plane 3 est représenté en éclaté en figure 3.

L'attache 3 est détaillée à la figure 2 en coupe et cette attache comporte une première partie 3a d'assemblage avec le caisson 2 et une seconde partie 3b de montage avec une attache complémentaire portée par un caisson d'un second tronçon.

La première partie 3a comprend au moins une liaison composite/métal.

Selon la figure 2, cette liaison est une liaison à double cisaillement qui est pourvue d'un élément de ferrure 4 continu sur au moins une face 2a du caisson 2, est pourvue d'un élément de contre-ferrure 5, entre lesquels est reçue une extrémité de ladite face du caisson, est pourvue de pions de fixation 6 traversant la ferrure, l'extrémité de la face et la contre ferrure et est pourvue de moyens 7 d'attache de la contre-ferrure sur la ferrure.

Dans le cadre du procédé de l'invention, les liaisons métal composite sont constituées d'une ferrure et d'une contre ferrure ou doubleur pour assurer un assemblage par double cisaillement mécanique au droit des fixations de liaison, solution plus performante qu'une liaison par simple cisaillement avec une ferrure d'un seul coté.

L'optimisation de la liaison métal composite est mis en œuvre à partir d'éléments de calcul dont le principe est décrit plus loin.

Cette optimisation permet de définir la répartition et la forme de l'éclissage métallique, la ferrure et le doubleur, la géométrie et la nature, diamètre et matériau, des fixations sur chaque rangée, le pas optimal par rangée et entre rangées de la liaison.

Dans l'exemple de la figure 4, la liaison composite/métal est une liaison à multi-cisaillement 12 au droit des fixations et intègre dans le composite au moins un doubleur métallique 13, en plus de la contre ferrure 5, adapté à faire transiter les efforts entre la partie composite et la ferrure métallique.

Une solution d'assemblage avec multi-cisaillement au droit des fixations en intégrant dans le composite des doubleurs métalliques permet d'adapter le nombre de doubleurs en fonction de la répartition du cisaillement visée sur les fixations.

En effet, plus on a de doubleurs plus l'effort repris par fixation est important pour faire transiter les efforts entre la partie composite et la ferrure métallique.

Ceci permet de limiter le diamètre des boulons et d'apporter une meilleure contribution de la structure composite.

De retour à l'exemple de la figure 3, les ferrures sont des ferrures continues et adaptées à chaque coté de la paroi travaillante du caisson du tronçon de pale et en particulier sur les deux parois les plus sollicités mécaniquement: c'est à dire les parois 2a, 2b coté peau 21, 22.

La méthode de dimensionnement d'une telle liaison mécanique est appliquée dans le cadre d'une définition de détail comme suit:

- le transfert d'effort entre le composite et les éléments métalliques est réalisé par des fixations par boulons disposés sur 4 rangées, tous les boulons ayant le même diamètre ; en effet pour des raisons industrielle, il est plus simple de n'avoir qu'un nombre minimum de famille de boulons à gérer ;
- l'épaisseur du composite est maintenue constante, pour des raisons de simplicité de fabrication ;
- par contre, les ailes de la ferrure et du doubleur sont d'épaisseur progressive pour repartir de façon équivalente les efforts sur chaque rangée conformément à la méthode de calcul en multicisaillement ;
- Le doubleur métallique est lié à la ferrure par des fixations de diamètre 26 mm qui transfèrent les efforts par simple cisaillement.

En prenant l'exemple de réalisation de la figure 2, selon la présente invention, pour l'optimisation mécanique de la liaison multi-cisaillement, au lieu de ramener le système à un système équivalent auquel on peut appliquer la méthode de Huth globalement comme dans le cas de la figure 6 de l'art antérieur, on décompose le système en sous ensembles auxquels on applique rigoureusement la méthode de Huth selon la modélisation de la figure 5.

En pratique, la méthode de la présente invention consiste à décrire chaque cisaillement par sa raideur, puis à appliquer les relations mécaniques classiques et simple. On aboutit au final à un système d'équations adapté à une résolution sur un ordinateur.

De ce fait, on est à même de prendre en compte toutes les spécificités de chaque cisaillement (matériau, module, épaisseur) et donc de calculer précisément en chaque point l'état de contrainte.

Ceci permet de dimensionner chaque zone au mieux par un processus itératif : quand on trouve à une itération une contrainte trop élevée, on rajoute de la matière, ou à l'inverse si la contrainte est faible, on peut en enlever.

Pour ce faire, selon l'exemple de la figure 5, on décompose le système réel en autant de système de Huth qu'il y a d'interface de cisaillement simple.

A titre d'exemple, pour le cas d'une liaison à cisaillement d'ordre 4, 2 ailes de composite 141, 142 et 3 ailes de métal 51, 52, 53, telle que représentée à la figure 7, et comportant 3 rangées 61, 62, 63 de pions, on obtient un ensemble de 8 sous systèmes de Huth « maille » 100. Ces sous ensembles sont représentés à la figure 8 par des ensembles de 4 ressorts 111, chaque ressort étant représentatif de la raideur du matériau sollicité.

Les ressorts sont reliés à des nœuds 110 correspondant aux points d'interface pion/matériau.

Selon la méthode, deux mailles adjacentes 100a, 100b sont reliées par un ressort, ce qui traduit le fait qu'un même matériau est sollicité par deux zones de cisaillement distinctes : c'est en fait ce que le modèle de Huth antérieur ne savait pas faire.

Pour dimensionner les liaisons, il faut alors calculer les diverses raideurs, en fonction des propriétés des matériaux concernés, de la géométrie des pièces mises en jeu et bien entendu des efforts à faire passer dans la liaison.

On peut donc a priori prendre en compte de façon indépendante chaque pion et chaque matériau, ce qui donne une grande liberté de choix de solutions optimisables.

On appelle pion tout moyen de fixation traversant utilisable pour une telle liaison.

On peut notamment choisir d'avoir des pions identiques pour des raisons de facilité de réalisation industrielle, et seulement jouer sur les épaisseurs des divers matériaux entre chaque rangée de pions. Ou bien, on peut garder des matériaux de même épaisseur, et faire varier les dimensions des pions. Il est aussi possible de choisir une solution intermédiaire.

A partir du schéma des mailles on passe aux calculs d'efforts comme représenté à la figure 9.

Dans ce cadre, on note rij, où i et j sont des entiers, la raideur de la partition j de pions de la rangée i, et Rik où i et k sont des entiers, la raideur de la bande de matière k de la rangée i.

Les efforts sont notés Fem, m entier pour les flux entrants provenant de la partie courante composite, Fsn, n entier, pour les flux sortants, et fij les flux transitant dans la liaison, ces flux étant ceux que l'on cherche à déterminer grâce au modèle.

- les efforts fij représentent directement les efforts de matage qui se transmettent de part et d'autre des plans moyens de chaque aile de composite vers les ailes métalliques contiguës.

- Les bandes de matière situées entre les rangées de pions et de raideur Rik, ailes métalliques et ailes composites, sont considérées comme ponctuelles : toute la raideur R de chaque aile est donc ramenée au niveau de son plan moyen.

- Les efforts dans ces bandes de matière sont déterminés selon le principe de transfert suivant : un flux d'effort incident provenant d'une aile composite va voir, au cours de sa traversée de la liaison, sa valeur diminuer au profit d'un flux d'effort grandissant dans les ailes métalliques mitoyennes, les pions assurant ce transfert entre les parties composites et les parties métalliques grâce à leur raideur propre.

Une fois cette modélisation schématique effectuée, on détermine les équations de compatibilité des déplacements, et de conservation du flux.

Ces équations s'obtiennent à partir d'une analogie électromécanique en appliquant la loi des mailles et la loi des nœuds.

Compatibilité des déplacements selon la loi des mailles :

$$\text{Mailles comprises entre les rangées } 1 \text{ et } 2 : \begin{cases} \dfrac{f_{11}}{r_{11}} + \dfrac{f_{11}}{R_{11}} - \dfrac{f_{21}}{r_{21}} - \dfrac{Fe_1 - f_{11} - f_{12}}{R_{12}} = 0 \\[2mm] -\dfrac{f_{12}}{r_{12}} + \dfrac{Fe_1 - f_{11} - f_{12}}{R_{12}} + \dfrac{f_{22}}{r_{22}} - \dfrac{f_{12} + f_{13}}{R_{13}} = 0 \\[2mm] \dfrac{f_{13}}{r_{13}} + \dfrac{f_{12} + f_{13}}{R_{13}} - \dfrac{f_{23}}{r_{23}} - \dfrac{Fe_2 - f_{13} - f_{14}}{R_{14}} = 0 \\[2mm] -\dfrac{f_{14}}{r_{14}} + \dfrac{Fe_2 - f_{13} - f_{14}}{R_{14}} + \dfrac{f_{24}}{r_{24}} - \dfrac{f_{14}}{R_{15}} = 0 \end{cases}$$

$$\text{Mailles comprises entre les rangées } 2 \text{ et } 3 : \begin{cases} \dfrac{f_{21}}{r_{21}} + \dfrac{f_{11} + f_{21}}{R_{21}} - \dfrac{f_{31}}{r_{31}} - \dfrac{Fe_2 - f_{11} - f_{12} - f_{21} - f_{22}}{R_{22}} = 0 \\[2mm] -\dfrac{f_{22}}{r_{22}} + \dfrac{Fe_2 - f_{11} - f_{12} - f_{21} - f_{22}}{R_{22}} + \dfrac{f_{32}}{r_{32}} - \dfrac{f_{12} + f_{13} + f_{22} + f_{23}}{R_{23}} = 0 \\[2mm] \dfrac{f_{23}}{r_{23}} + \dfrac{f_{12} + f_{13} + f_{22} + f_{23}}{R_{23}} - \dfrac{f_{33}}{r_{33}} - \dfrac{Fe_2 - f_{13} - f_{14} - f_{23} - f_{24}}{R_{24}} = 0 \\[2mm] -\dfrac{f_{24}}{r_{24}} + \dfrac{Fe_2 - f_{13} - f_{14} - f_{23} - f_{24}}{R_{24}} + \dfrac{f_{34}}{r_{34}} - \dfrac{f_{14} + f_{24}}{R_{25}} = 0 \end{cases}$$

Conservation du flux selon la loi des nœuds :

A ce stade, nous disposons de 8 équations pour déterminer 12 inconnues, les efforts fij : il manque donc 4 équations, qu'il faut chercher parmi les conditions aux limites.

$$\begin{cases} Fe_1 = f_{11} + f_{12} + f_{21} + f_{22} + f_{31} + f_{32} \\ Fe_2 = f_{13} + f_{14} + f_{23} + f_{24} + f_{33} + f_{34} \\ Fs_1 = f_{11} + f_{21} + f_{31} \\ Fs_2 = f_{12} + f_{13} + f_{22} + f_{23} + f_{32} + f_{33} \end{cases}$$
$$\left( Fs_3 = f_{14} + f_{24} + f_{34} \right)$$

La dernière équation est mise entre parenthèses car elle est redondante. En effet, par conservation du flux on a toujours : $Fe_1 + Fe_2 = Fs_1 + Fs_2 + Fs_3$, donc si les quatre premières équations précédentes sont vérifiées, on a systématiquement la dernière aussi, elle n'apporte donc rien de plus par rapport à celles-ci.

On obtient donc autant d'équations que d'inconnues, et ce, quelle que soit la complexité de la liaison mécanique Au total le système linéaire obtenu dans le cas d'une liaison présentant un ordre de cisaillement égal à 4 et comportant 3 rangées de pions est donc comme représenté à la figure 11

Il suffit donc d'inverser la matrice du système pour obtenir les efforts fij transitant dans la liaison.

Pour cela il faut exprimer les raideurs rij et Rik en fonction des paramètres de liaison qui sont représentés à la figure 10: épaisseurs de métal Em et de composite Ec, modules d'Young du métal em et du composite ec, diamètres des pions d, pas entre rangées de pions P, module d'Young des pions.

Enfin il est nécessaire de déterminer les efforts Fem et Fsn constituant les conditions aux limites de la liaison.

On détermine le nombre de pions $N_{pions}$ par rangée en se donnant un pas entre pions Pp en accord avec les critères géométriques ($4d \le Pp \le 5d$).

Les modules d'Young équivalents des parties composites sont déterminés à partir d'un calcul de couches orthotropes standard .

Les rij sont calculés à partir de la modélisation de Huth ;
A titre d'exemple, le calcul des raideurs r34 et r22 de la figure 9 est le suivant:

$$\frac{1}{r_{34}} = \xi \left( \frac{em_{33} + \dfrac{ec_{23}}{2}}{2d_3} \right)^{2/3} \left( \frac{1}{Em_{33}em_{33}} + \frac{1}{Ec_{23} \cdot \dfrac{ec_{23}}{2}} + \frac{1}{2E_f em_{33}} + \frac{1}{E_f \dfrac{ec_{23}}{2}} \right)$$

Pour le calcul de r34 on considère donc la totalité de l'épaisseur de l'aile métallique em33, puisque c'est une aile extérieure, et la moitié de l'épaisseur de l'aile composite pour tenir compte de la distribution des efforts de part et d'autre du plan moyen de cette aile.

$$\frac{1}{r_{22}} = \xi \left( \frac{\dfrac{em_{22}}{2} + \dfrac{ec_{21}}{2}}{2d_2} \right)^{2/3} \left( \frac{1}{Em_{22.} \dfrac{em_{22}}{2}} + \frac{1}{Ec_{21} \cdot \dfrac{ec_{21}}{2}} + \frac{1}{2E_f \cdot \dfrac{em_{22}}{2}} + \frac{1}{E_f \cdot \dfrac{ec_{21}}{2}} \right)$$

Pour r22, les ailes métallique et composite considérées sont intérieures à la liaison, donc on considère la moitié de leur épaisseur.

On notera que $\xi$ = 4.2 pour une liaison métal / composite
Pour les raideurs Rik

Les indices k impairs correspondent aux ailes métalliques, et les k pairs aux ailes composites. On a alors simplement :

$$R_{ik} = \frac{E_{ik} e_{ik} W}{P_i}$$

où W représente la largeur de la liaison en symétrie plane ou le périmètre moyen en symétrie cylindrique

Les efforts Fem, efforts entrant dans la liaison par l'intermédiaire du composite sont déterminés en exprimant la compatibilité des déplacements des ailes composites, ainsi que la conservation du flux, au niveau de la zone composite non piontée, soit avant la première rangée de pion.

On obtient donc les équations ci-dessous :

$$\begin{cases} \dfrac{Fe_1}{Ec_{11}ec_{11}W}l_c = \dfrac{Fe_2}{Ec_{12}ec_{12}W}l_c \\ Fe_1 + Fe_2 = F_{total} \end{cases}$$

Sachant que l'effort total $F_{total}$ est fixé par le cahier des charges de la liaison.

Pour les efforts Fsn, efforts Fsn sortant de la liaison par l'intermédiaire des ailes métalliques, on considère les grandeurs métalliques épaisseurs et modules au niveau de la dernière rangée de pions :

$$\begin{cases} \dfrac{Fs_1}{Em_{31}em_{31}W}l_m = \dfrac{Fs_2}{Em_{32}em_{32}W}l_m \\ \dfrac{Fs_2}{Em_{32}em_{32}W}l_m = \dfrac{Fs_3}{Em_{33}em_{33}W}l_m \\ Fs_1 + Fs_2 + Fs_3 = F_{total} \end{cases}$$

Une fois ces calculs de raideurs effectués, on les transfère dans la matrice du système de transfert d'effort que l'on inverse pour obtenir les efforts fij transitant dans toute la liaison.

On peut notamment choisir d'avoir des pions identiques pour des raisons de facilité industrielle, et seulement jouer sur les épaisseurs des divers matériaux entre chaque rangée de pions. Ou bien, on peut garder des matériaux de même épaisseur, et faire varier les dimensions des pions. Ou choisir une solution intermédiaire.

L'invention s'applique à tout dispositif de liaison métal composite, qu'il s'agisse de pales d'éoliennes, de tubes pétroliers, de structures en composites de propulseurs à poudres, tels ceux de la navette spatiale ou éventuellement d'ailes d'avions.

Selon un de ses modes, elle peut aussi s'appliquer aux liaisons métal/métal, en fait à tout type de liaison dans la mesure en particulier où la méthode d'optimisation est générale.

## Revendications

**1.** Procédé de réalisation d'une liaison mécanique composite/métal piontée à multi-cisaillements comportant la réalisation d'une attache (3) comportant un élément de ferrure (4) recevant une terminaison composite (14, 141, 142), un ou plusieurs doubleurs (5, 13, 51, 52) adaptés à faire transiter les efforts entre composite et métal et des pions traversant en nombre et position en fonction de la répartition du cisaillement visée sur les fixations pour laquelle l'épaisseur de la terminaison composite est maintenue constante alors que les ailes de la ferrure et desdits un ou plusieurs doubleurs sont réalisées avec une épaisseur progressive, ledit procédé étant **caractérisé en ce qu'**il comporte des étapes de dimensionnement de la liaison à multi-cisaillements en décomposant le système constitué par la liaison en autant de sous ensembles qu'il y a d'interfaces de cisaillement simples, en définissant les sous ensembles autour de chaque interface de cisaillement, en décrivant chaque cisaillement par sa raideur en appliquant les relations mécaniques pour aboutir à un système d'équations adapté à une résolution sur ordinateur en appliquant la méthode de Huth à chaque interface de cisaillement, de dimensionnement ensuite de chaque zone de la liaison autour des cisaillements par un processus itératif par ajout de matière à une itération déterminant une contrainte trop élevée, et par retrait de matière à une itération déterminant une contrainte faible, et **en ce que** ladite épaisseur progressive est déterminée par les étapes de dimensionnement pour repartir de façon équivalente les efforts sur chaque rangée.

**2.** Procédé selon la revendication 1 **caractérisé en ce qu'**on représente les sous ensembles par des ensembles de ressorts, chaque ressort étant représentatif de la raideur du matériau sollicité.

**3.** Procédé selon l'une quelconque des revendications précédentes **caractérisé en ce qu'**on décompose la liaison en un ensemble de sous systèmes de Huth de type maille et on relie les mailles adjacentes par un ressort en sorte de traduire le fait qu'un même matériau est sollicité par deux zones de cisaillement distinctes.

4. Procédé selon l'une quelconque des revendications précédentes **caractérisé en ce qu'**on calcule ensuite les diverses raideurs, en fonction des propriétés des matériaux concernés, de la géométrie des pièces mises en jeu et des efforts à faire passer dans la liaison.

5. Procédé selon la revendication 4 **caractérisé en ce qu'**on transfère les calculs de raideur dans une matrice de système de transfert d'effort que l'on inverse pour obtenir les efforts (fij) transitant dans toute la liaison.

6. Procédé selon l'une quelconque des revendications précédentes **caractérisé en ce que**, les liaisons comportant des pions, on prend en compte de façon indépendante chaque pion et chaque matériau.

7. Procédé selon l'une quelconque des revendications précédentes appliqué à une liaison à cisaillement d'ordre quatre comportant deux ailes composites (141, 142), trois ailes de métal (51, 52, 53) et trois rangées de pions (61, 62, 63) **caractérisé en ce qu'**on décompose la liaison en un ensemble de 8 sous systèmes de Huth de type maille.

8. Procédé selon la revendication 7 **caractérisé en ce qu'**on représente les sous systèmes par des ensembles de 4 ressorts, chaque ressort étant représentatif de la raideur du matériau sollicité et on réalise la liaison après dimensionnement au moyen desdits sous systèmes.

9. Procédé selon l'une quelconque des revendications précédentes **caractérisé en ce qu'**on dimensionne la liaison en calculant en chaque point l'état de contrainte de chaque cisaillement en fonction de ses spécificités matériau, module, épaisseur.

**Patentansprüche**

1. Verfahren zur Herstellung einer mechanischen gebolzten Verbundwerkstoff-/Metall-Mehrfachscherverbindung, umfassend die Herstellung eines Verbindungselements (3) mit einem Beschlagelement (4), das einen Verbundwerkstoffabschluss (14, 141, 142) aufnimmt, einem oder mehrere Verdoppler (5, 13, 51, 52), die dazu geeignet sind, dass Kräfte zwischen dem Verbundwerkstoff und dem Metall hindurchgehen, und Durchtrittsbolzen in Anzahl und Position in Abhängigkeit von der angestrebten Scherverteilung auf den Befestigungen, wobei die Dicke des Verbundwerkstoffabschlusses konstant gehalten wird, während die Flügel des Beschlags und des einen oder der mehreren Verdoppler mit progressiver Dicke ausgeführt sind, wobei das Verfahren **dadurch gekennzeichnet ist, dass**
es die Schritte der Dimensionierung der Mehrfachscherverbindung durch Zerlegung des aus der Verbindung bestehenden Systems in so viele Untereinheiten umfasst, wie es einfache Schergrenzflächen gibt, Definieren der Untereinheiten um jede Schergrenzfläche herum, Beschreiben jeder Scherung durch ihre Steifigkeit unter Anwendung der mechanischen Beziehungen, um durch Anwendung der Huth-Methode an jeder Schergrenzfläche zu einem Gleichungssystem zu gelangen, das für eine Computerauflösung geeignet ist, dann Dimensionieren jedes Bereichs der Verbindung um die Scherungen herum durch ein iteratives Verfahren durch Hinzufügen von Material bei einer Iteration, bei der eine zu hohe Spannung ermittelt wird, und durch Entfernen von Material bei einer Iteration, bei der eine niedrige Spannung ermittelt wird,
und dass die progressive Dicke durch die Dimensionierungsschritte bestimmt wird, um die Kräfte auf jeder Reihe in einer äquivalenten Weise zu verteilen.

2. Verfahren nach Anspruch 1, **dadurch gekennzeichnet, dass** die Untereinheiten durch Sätze von Federn dargestellt werden, wobei jede Feder repräsentativ für die Steifigkeit des beanspruchten Materials ist.

3. Verfahren nach einem der vorhergehenden Ansprüche, **dadurch gekennzeichnet, dass** die Verbindung in eine Anordnung von gitterartigen Huth-Untersystemen zerlegt wird und die benachbarten Gittermaschen durch eine Feder verbunden werden, um zu berücksichtigen, dass dasselbe Material durch zwei verschiedene Scherbereiche beansprucht wird.

4. Verfahren nach einem der vorhergehenden Ansprüche, **dadurch gekennzeichnet, dass** die verschiedenen Steifigkeiten dann in Abhängigkeit von den Eigenschaften der betreffenden Materialien, der Geometrie der verwendeten Teile und den in der Verbindung zu übertragenden Kräften berechnet werden.

**5.** Verfahren nach Anspruch 4, **dadurch gekennzeichnet, dass** die Steifigkeitsberechnungen auf eine Kraftübertragungssystemmatrix übertragen werden, die invertiert wird, um die Kräfte (fij) zu erhalten, die durch die gesamte Verbindung hindurchgehen.

**6.** Verfahren nach einem der vorhergehenden Ansprüche, **dadurch gekennzeichnet, dass** bei Bolzen aufweisenden Verbindungen jeder Bolzen und jedes Material unabhängig voneinander berücksichtigt werden.

**7.** Verfahren nach einem der vorhergehenden Ansprüche, das auf eine Scherverbindung vierter Ordnung angewandt wird, die zwei Verbundwerkstoffflügel (141, 142), drei Metallflügel (51, 52, 53) und drei Reihen von Bolzen (61, 62, 63) enthält, **dadurch gekennzeichnet, dass** die Verbindung in eine Anordnung von 8 gitterartigen Huth-Untersystemen zerlegt wird.

**8.** Verfahren nach Anspruch 7, **dadurch gekennzeichnet, dass** die Untersysteme durch Sätze von 4 Federn dargestellt werden, wobei jede Feder repräsentativ für die Steifigkeit des beanspruchten Materials ist, und die Verbindung nach der Dimensionierung mit Hilfe der genannten Untersysteme hergestellt wird.

**9.** Verfahren nach einem der vorhergehenden Ansprüche, **dadurch gekennzeichnet, dass** die Verbindung dimensioniert wird, indem an jedem Punkt der Spannungszustand jeder Scherung in Abhängigkeit von ihren spezifischen Eigenschaften Material, Modul, Dicke usw. berechnet wird.

## Claims

**1.** A method for making a multi-shear pinned composite/metal mechanical connection including making a fastener (3) including a bracket element (4) receiving a composite termination (14, 141, 142), one or more doublers (5, 13, 51, 52) adapted to switch stresses between composite and metal and through pins in number and position as a function of the shear distribution intended on the attachments for which the thickness of the composite termination is kept constant whereas the wings of the bracket and of said one or more doublers are made with a gradual thickness, said method being **characterised in that** it includes steps of dimensioning the multi-shear connection by resolving the system consisting of the connection into as much sub-assemblies as there are simple shear interfaces, by defining the sub-assemblies about each shear interface, by describing each shear by its stiffness by applying mechanical relationships to result in a system of equations adapted to be solved on a computer by applying the Huth method to each shear interface, then dimensioning each zone of the connection about the shears by an iterative process by adding material to an iteration determining too high a stress, and removing material at an iteration determining a low stress, and **in that** said gradual thickness is determined by dimensioning steps to distribute stresses equivalently on each row.

**2.** The method according to claim 1, **characterised in that** the sub-assemblies are represented by assemblies of springs, each spring being representative of the stiffness of the biased material.

**3.** The method according to any of the preceding claims, **characterised in that** the connection is resolved into an assembly of mesh-type Huth sub-systems and adjacent meshes are connected by a spring so as to reflect the fact that a same material is biased by two distinct shear zones.

**4.** The method according to any of the preceding claims, **characterised in that** the various stiffnesses are then calculated, as a function of the properties of the materials in question, the geometry of parts involved and loads to pass through the connection.

**5.** The method according to claim 4, **characterised in that** the stiffness calculations are transferred in a load transfer system matrix which is inversed to obtain the loads (fij) passing through the entire connection.

**6.** The method according to any of the preceding claims, **characterised in that**, since the connections include pins, each pin and each material are independently taken into account.

**7.** The method according to any of the preceding claims, applied to a four-order shear connection including two composite wings (141, 142), three metal wings (51, 52, 53) and three rows of pins (61, 62, 63), **characterised in that** the connection is resolved into an assembly of 8 mesh-type Huth sub-systems.

8. The method according to claim 7, **characterised in that** the sub-systems are represented by assemblies of 4 springs, each spring being representative of the stiffness of the biased material and the connection is made after dimensioning by means of said sub-systems.

9. The method according to any of the preceding claims, **characterised in that** the connection is dimensioned by calculating at each point the stress state of each shear as a function of its material, module, thickness specificities.

Fig. 1

Fig. 2

Fig. 3

**Fig. 4**

**Fig. 5**

Liaison étudiée

Double cisaillement

em1

ec1

em2

**Fig. 6**

Liaison calculée avec le modèle <<classique>>

em1+em2

ec1

**Fig. 7**

**Fig. 8**

**Fig. 9**

**Fig. 10**

$$
\begin{bmatrix}
\frac{1}{r_{11}}+\frac{1}{R_{11}}+\frac{1}{R_{12}} & \frac{1}{R_{12}} & 0 & 0 & -\frac{1}{r_{21}} & 0 & 0 & 0 & 0 & 0 & 0 & 0 \\[4pt]
-\frac{1}{R_{12}} & -\frac{1}{r_{12}}-\frac{1}{R_{12}}-\frac{1}{R_{13}} & -\frac{1}{R_{13}} & 0 & 0 & \frac{1}{r_{22}} & 0 & 0 & 0 & 0 & 0 & 0 \\[4pt]
0 & \frac{1}{R_{13}} & \frac{1}{r_{13}}+\frac{1}{R_{13}}+\frac{1}{R_{14}} & \frac{1}{R_{14}} & 0 & 0 & -\frac{1}{r_{23}} & 0 & 0 & 0 & 0 & 0 \\[4pt]
0 & 0 & -\frac{1}{R_{14}} & -\frac{1}{r_{14}}-\frac{1}{R_{14}}-\frac{1}{R_{15}} & 0 & 0 & 0 & \frac{1}{r_{24}} & 0 & 0 & 0 & 0 \\[4pt]
\frac{1}{R_{21}}+\frac{1}{R_{22}} & \frac{1}{R_{22}} & 0 & 0 & \frac{1}{r_{21}}+\frac{1}{R_{21}}+\frac{1}{R_{22}} & \frac{1}{R_{22}} & 0 & 0 & -\frac{1}{r_{31}} & 0 & 0 & 0 \\[4pt]
\frac{1}{R_{22}} & -\frac{1}{R_{22}}-\frac{1}{R_{23}} & -\frac{1}{R_{23}} & 0 & -\frac{1}{R_{23}} & \frac{1}{r_{22}}-\frac{1}{R_{22}}-\frac{1}{R_{23}} & -\frac{1}{R_{23}} & 0 & 0 & \frac{1}{r_{32}} & 0 & 0 \\[4pt]
0 & \frac{1}{R_{23}} & \frac{1}{R_{23}}+\frac{1}{R_{24}} & \frac{1}{R_{24}} & 0 & \frac{1}{R_{23}} & \frac{1}{r_{23}}+\frac{1}{R_{23}}+\frac{1}{R_{24}} & \frac{1}{R_{24}} & 0 & 0 & -\frac{1}{r_{33}} & 0 \\[4pt]
0 & 0 & -\frac{1}{R_{24}} & -\frac{1}{R_{24}}-\frac{1}{R_{25}} & 0 & 0 & -\frac{1}{R_{24}} & -\frac{1}{r_{24}}-\frac{1}{R_{24}}-\frac{1}{R_{25}} & 0 & 0 & 0 & \frac{1}{r_{34}} \\[4pt]
1 & 1 & 0 & 0 & 1 & 1 & 0 & 0 & 1 & 1 & 0 & 0 \\[4pt]
0 & 0 & 1 & 1 & 0 & 0 & 1 & 1 & 0 & 0 & 1 & 1 \\[4pt]
1 & 0 & 0 & 0 & 1 & 0 & 0 & 0 & 1 & 0 & 0 & 0 \\[4pt]
0 & 1 & 1 & 0 & 0 & 1 & 1 & 0 & 0 & 1 & 1 & 0
\end{bmatrix}
\times
\begin{bmatrix}
f_{11} \\ f_{12} \\ f_{13} \\ f_{14} \\ f_{21} \\ f_{22} \\ f_{23} \\ f_{24} \\ f_{31} \\ f_{32} \\ f_{33} \\ f_{34}
\end{bmatrix}
=
\begin{bmatrix}
\frac{Fe_1}{R_{12}} \\[4pt] -\frac{Fe_1}{R_{12}} \\[4pt] \frac{Fe_2}{R_{14}} \\[4pt] -\frac{Fe_2}{R_{14}} \\[4pt] \frac{Fe_2}{R_{22}} \\[4pt] -\frac{Fe_2}{R_{22}} \\[4pt] \frac{Fe_2}{R_{24}} \\[4pt] -\frac{Fe_2}{R_{24}} \\[4pt] Fe_1 \\[4pt] Fe_2 \\[4pt] Fs_1 \\[4pt] Fs_2
\end{bmatrix}
$$

Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1584817 A
- EP 1878915 A
- WO 0148378 A
- FR 2675563